# EUROPEAN PATENT APPLICATION

(11) **EP 3 933 345 A2**
(43) Date of publication of application: **05.01.2022**
(21) Application number: 21200057.4
(22) Date of filing: 30.09.2021
(51) Int. Cl.: G01C 21/32, G01C 21/00

(54) **ROAD EVENT DETECTION METHOD, APPARATUS, DEVICE AND STORAGE MEDIUM**

(30) Priority: 11.12.2020 CN 202011449694
(71) Applicant: BEIJING BAIDU NETCOM SCIENCE TECHNOLOGY CO., LTD., No.10 Shangdi 10th Street Haidian District Beijing 100085 (CN)
(72) Inventor: YAN, Chao, Beijing (CN); GAO, Chao, Beijing (CN); GAO, Xiaojie, Beijing (CN); CAI, Yuzhan, Beijing (CN)
(74) Representative: J A Kemp LLP

(57) **Abstract**

The present application discloses a road event detection method, an apparatus, a device and a storage medium, and relates to artificial intelligence, big data, intelligent transportation, automatic driving, and cloud computing technologies in data processing. A specific implementation is that: by obtaining road images collected and returned by multiple vehicles within a historical period, and performing image processing on single-frame road images to determine road events included in the road images, types and/or locations of the road events can be located accurately; further, by performing clustering on road event data of multiple frames of road images including the road events to obtain all road events occurring within the historical period and road event information, all road events occurring within the historical period can be determined accurately, and the types and/or the locations of the road events can be determined accurately, thereby improving the accuracy of road event detection.

## Description

### TECHNICAL FIELD

The present application relates to artificial intelligence, big data, intelligent transportation, automatic driving and cloud computing technologies in data processing and, in particular, relates to a road event detection method, an apparatus, a device and a storage medium.

### BACKGROUND

It is one of common services of electronic maps to add reminder information of road events occurring on roads into the maps. Accurate discovery of road events can be applied to planning and recommendation of navigation routes, trajectory planning of automatic driving vehicles, and other scenarios, so as to improve the accuracy of navigation services and reduce the difficulty of automatic driving.

At present, road events that may occur on roads include, but are not limited to, congestion, construction, accidents and other types of events. An existing way of judging a road event is to judge road congestion situation according to GPS trajectories of vehicles. However, the accurate type of the event cannot be found by the GPS trajectories, and the accurate location of the event (such as a lane where the event occurred) cannot be located due to the limitation of GPS accuracy, leading to low accuracy of event detection.

### SUMMARY

The present application provides a road event detection method, an apparatus, a device and a storage medium.

According to an aspect of the present application, a road event detection method is provided, including:
obtaining road images collected and returned by multiple vehicles within a historical period;
performing image processing on the road images to determine road events included in the road images;
performing multi-frame data clustering on all road images including the road events to determine a road event occurring within the historical period, where the road event has road event information, and the road event information includes an event type and/or event location information; and
updating map data according to the road event information of each road event.

According to an aspect of the present application, a road event detection apparatus is provided, including:
a road image obtaining module, configured to obtain road images collected and returned by multiple vehicles within a historical period;
an event detecting module, configured to perform image processing on the road images to determine road events included in the road images, and perform multi-frame data clustering on all road images including the road events to determine a road event occurring within the historical period, where the road event has road event information, and the road event information includes event type information and/or event location information;
an event information updating module, configured to update map data according to the road event information of each road event.

According to an aspect of the present application, an electronic device is provided, including:
at least one processor, and
a memory communicatively connected with the at least one processor; where,
the memory stores instructions executable by the at least one processor, and the instructions are executed by the at least one processor to enable the at least one processor to execute the above method.

According to an aspect of the present application, a non-transitory computer-readable storage medium is provided, having computer instructions stored thereon, where the computer instructions are used to cause a computer to execute the above method.

According to an aspect of the present application, a computer program product is provided, including a computer program which, when executed by a processor, implements any of the above methods.

According to the technology of the present application, the accuracy of road event detection is improved.

It should be understood that contents described in this section are not intended to identify key or important features of the embodiments of the present application, nor are they intended to limit the scope of the present application. Other features of the present application will be easily understood by the following description.

### BRIEF DESCRIPTION OF THE DRAWINGS

The drawings are used to better understand the solutions, and do not constitute a limitation on the present application. Among them:
FIG. 1 is a framework diagram of a system for road event detection according to an embodiment of the present application;
FIG. 2 is a flow chart of a road event detection method according to a first embodiment of the present application;
FIG. 3 is a flow chart of a road event detection method according to a second embodiment of the present application;
FIG. 4 is a schematic diagram of an event marker according to the second embodiment of the present application;
FIG. 5 is a schematic diagram of a road event detection apparatus according to a third embodiment of the present application; and
FIG. 6 is a block diagram of an electronic device for implementing a road event detection method according to an embodiment of the present application.

### DETAILED DESCRIPTION OF THE EMBODIMENTS

Exemplary embodiments of the present application are described below with reference to the accompanying drawings, which include various details of the embodiments of the present application to facilitate understanding, and should be considered as merely exemplary. Therefore, those of ordinary skill in the art should recognize that various changes and modifications can be made to the embodiments described herein without departing from the scope and spirit of the present application. Similarly, for clarity and conciseness, descriptions of well-known functions and structures are omitted in the following description.

The present application provides a road event detection method, an apparatus, a device and a storage medium, which are applied to artificial intelligence, big data and intelligent transportation technologies in the field of data processing, so as to achieve the technical effect of improving the accuracy of road event detection.

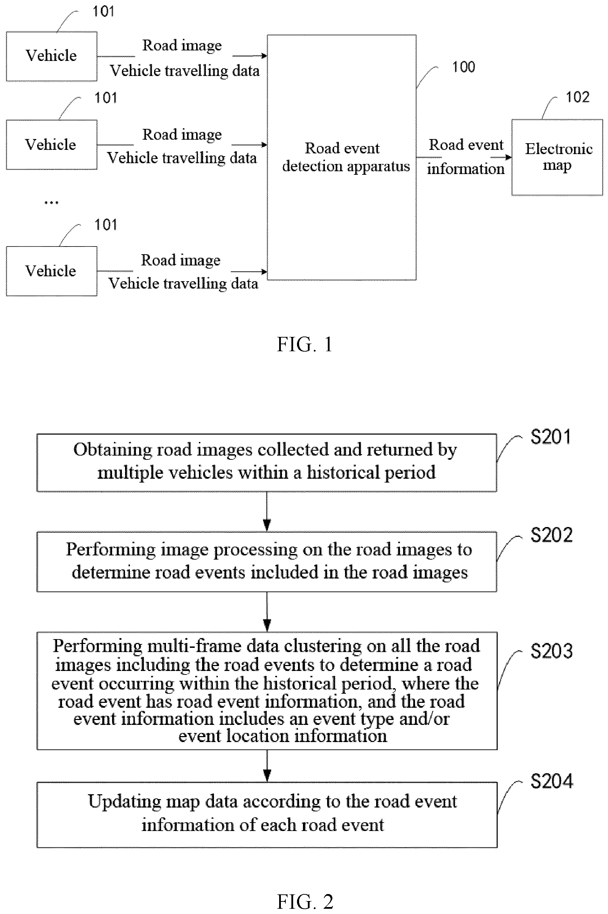

A method provided by an embodiment of the present application could be applied to a system for road event detection as shown in FIG. 1. As shown in FIG. 1, the system for road event detection includes a road event detection apparatus 100 for performing road event detection, multiple vehicles 101, and an electronic map 102. The multiple vehicles 101 collect road images (and also collect vehicle travelling data) during travelling on roads, and transmit the same to the road event detection apparatus 100. The road event detection apparatus 100 detects road events that are occurring on roads based on the road images and the vehicle travelling data that are collected and returned by all vehicles. In a practical application scenario, one or more area ranges, such as cities, regions, etc., can be set. All vehicles 101 travelling on roads within the area ranges collect road images (and also collect vehicle travelling data) in accordance with a collection rule and return the same to the road event detection apparatus 100. Based on all road events that are occurring on the roads within the area ranges for road image detection, the road event detection apparatus 100 can provide the road events to the electronic map 102 for use, such as planning a navigation route based on the road events, planning an automatic driving route based on the road events, or displaying the road events for users' reference, etc.

FIG. 2 is a flow chart of a road event detection method according to a first embodiment of the present application. As shown in FIG. 2, specific steps of the method are as follows.

Step 201, obtaining road images collected and returned by multiple vehicles within a historical period.

The historical period may be a latest time period, which could be set according to a need of a practical application scenario.

Exemplarily, if road event information needs to be updated on an electronic map once every interval of time period, road event detection needs to be performed once every interval of time period, and the historical period may be the previous interval time period. According to the time period of a set interval, when the previous time period ends, road images within the previous time period are obtained, and a road event/road events occurring within the previous time period is/are detected based on the road images within the previous time period.

In this embodiment, one or more area ranges, such as cities, regions, etc., can be set. All vehicles travelling on roads within the area ranges collect road images in accordance with a collection rule and return the same to the road event detection apparatus. The road event detection apparatus can obtain the road images collected by multiple vehicles travelling on all roads in the area ranges within the historical period.

Step 202, performing image processing on the road images to determine road events included in the road images.

After obtaining the road images within the historical period, image processing can be performed on each frame of the road images to detect the road events included in the road images.

A road event has road event information, and the road event information includes an event type and/or event location information. The event type includes but is not limited to: road construction, traffic control, accidents, and congestion. The event location information can be specific to a lane where the event occurs.

In a practical application, the type and the location of the road event on the road will change as time goes on, that is, the road event is a dynamic event.

Step 203, performing multi-frame data clustering on all road images including the road events to determine a road event occurring within the historical period, where the road event has road event information, and the road event information includes an event type and/or event location information.

After performing road event detection on single-frame road images, screening all road images including road events according to detection results of single-frame road images.

In this step, clustering is performed based on relevant information of the road events of all the road images including the road events, to obtain all road events occurring on roads in the set area ranges within the historical period. A clustering result includes the road event information of the road events.

Step 204, updating map data according to the road event information of each road event.

After obtaining the road event(s) occurring within the historical period, the road event information of each road event can be updated onto the map data, so as to accurately plan a navigation route and an automatic driving route and the like based on the updated map data including the latest road event information.

In the embodiment of the present application, by obtaining the road images collected and returned by multiple vehicles within the historical period, and performing image processing on single-frame road images to determine the road events included in the road images, types and/or locations of the road events can be located accurately; further, by performing clustering on the road event data of multiple frames of the road images including the road events to obtain all road events occurring within the historical period and the road event information, all road events occurring within the historical period can be determined accurately, and the types and/or the locations of the road events can be determined accurately, thereby improving the accuracy of road event detection.

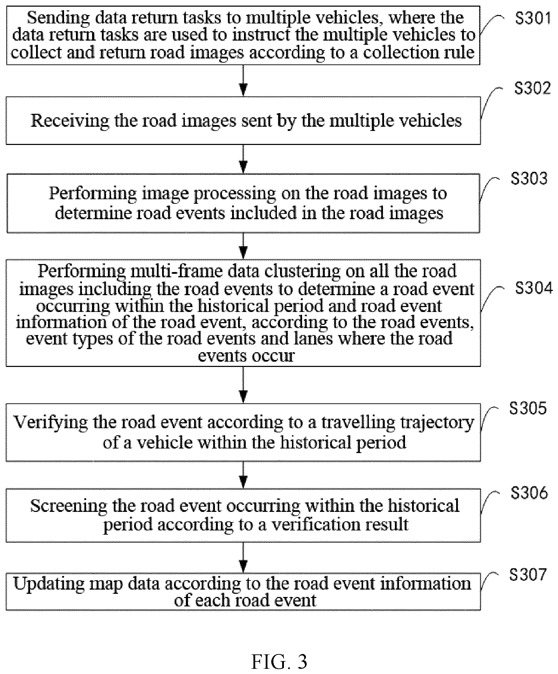

FIG. 3 is a flow chart of a road event detection method according to a second embodiment of the present application. On the basis of the above first embodiment, in this embodiment, the road images collected and returned by multiple vehicles within the historical period can be obtained by crowdsourcing return, so as to obtain the road images that can cover all the roads within the set area ranges. Further, after performing multi-frame data clustering on all the road images including the road events to determine the road event occurring within the historical period, and before updating the map data according to the road event information of each road event, the road event can be verified according to a travelling trajectory of a vehicle within the historical period; the road event occurring within the historical period is screened according to a verification result, so as to avoid the situation of misreporting of the road event and improve the accuracy of the road event on the map data.

As shown in FIG. 3, specific steps of the method are as follows.

Step 301, sending data return tasks to multiple vehicles, where the data return tasks are used to instruct the multiple vehicles to collect and return road images according to a collection rule.

The collection rule includes: collecting and returning road images according to a first time interval or a first distance interval, or collecting and returning road images according to a second time interval or a second distance interval within a preset range of a road event occurring currently. The second time interval is less than the first time interval, and the second distance interval is less than the first distance interval.

A vehicle can determine, according to the current location, whether it is within a preset range of a road event occurring currently, and if not within the preset range of any road event, the road images can be collected and returned according to the first time interval or the first distance interval. If the vehicle is within the preset range of a certain road event occurring currently, the road images are collected and returned according to the second time interval or the second distance interval.

In this way, for road sections within the preset range of the road event that has occurred, road images can be collected with shorter distance interval or higher frequency; for the detected road event, more road images can be collected on the roads around the road event, and more attention can be paid to the road sections where the road event has occurred, so that the road event can be updated more accurately.

In addition, the preset range can be set according to a need of a practical application scenario, which is not specifically limited in this embodiment. The first time interval, the second time interval, the first distance interval and the second distance interval all can be set and adjusted according to the practical application scenario, which are not specifically limited in this embodiment.

Optionally, the data return tasks can also be used to instruct multiple vehicles to collect and return travelling data such as locations, speed and braking information of the vehicles according to the collection rule. The location of a vehicle may be a GPS location that is located in real time. Based on the location of the vehicle that is returned each time, a travelling trajectory of the vehicle within the historical period can be obtained. In addition, the data return tasks require that the data returned by the vehicles can be set and adjusted according to the need of the practical application scenario, which is not specifically limited herein.

In this embodiment, using a data collection manner of obtaining road images and vehicle travelling data by crowdsourcing return, there is no need to add a special road test device or other image collection apparatus, which can reduce the cost.

Step S302, receiving the road images sent by the multiple vehicles.

In this embodiment, through the above steps S301-S302, the road images collected and returned by multiple vehicles within the historical period are obtained by the method of crowdsourcing return, and all the obtained road images can cover all the roads within the set area ranges; and for the detected road event, more road images can be collected on the roads around the road event, and more attention can be paid to the road sections where the road event has occurred, so that the road event can be updated more accurately.

Step S303, performing image processing on the road images to determine road events included in the road images.

A road event has road event information, and the road event information includes an event type and/or event location information.

In this embodiment, this step can be implemented in the following ways:
detecting a lane location in a road image, and a location of an event marker appearing in the road image; determining that the road image includes a road event, if it is determined that the event marker appears in a certain lane according to the lane location in the road image and the location of the event marker appearing in the road image.

Specifically, by performing image processing on a road image, locations of lane lines as well as the event marker and its location in the road image can be identified. The lane location between two adjacent lane levels can be determined according to the locations of the lane lines. According to the lane location in the road image and the location of the event marker appearing in the road image, whether the event marker appears in a certain lane can be determined, and if it is determined that the event marker appears in the certain lane, it can be determined that the road image includes a road event, and the lane where the road event occurs can be determined, which can realize accurate locating of the lane where the road event occurs.

If no event marker is found in the road image, or an event marker is identified but the event marker is not within any lane, it can be determined that the road image does not include a road event.

Further, the lane where the event marker appears is determined to be the lane where the road event occurs; the event type of the road event is determined according to a type of the event marker, so that the type and the lane of the road event included in the road image can be accurately identified.

Further, in combination with a travelling trajectory of a vehicle, the location of the vehicle on the road when the road image is collected can be determined, to obtain the location where the road event occurs.

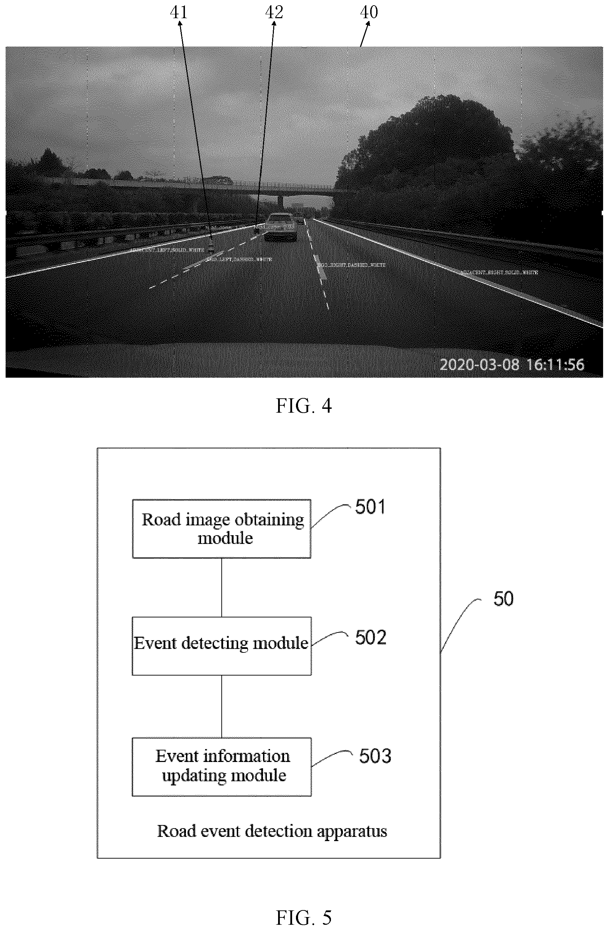

In this embodiment, an event marker of a certain type of road event is an object used to identify the occurrence of this type of road event, and when the event marker appears in a lane, it indicates that the corresponding type of road event has occurred at the location of the event marker. For example, if the road event is construction, event markers of the construction type can include a cone barrel, a construction worker, a construction wall, a construction notice board, etc. If any one of the event markers appears in a certain lane in the road image, it can indicate that there is a construction event there. For example, in a road image 40 shown in FIG. 4, cone barrels 41 and 42 appear in the leftmost lane, indicating that a construction event has occurred in this lane, and the location of the construction event can be further determined according to the location where the road image is collected.

The event markers in each type of road events are summarized and determined in advance, and image features of all the event markers are obtained, so as to identify the event markers from the images.

Optionally, a process of performing image processing on the road image, and identifying the lane lines and the event marker in the road image can be specifically implemented by adopting a method of identifying an image feature of a known object in an image in the prior art, which is not specifically limited herein.

Optionally, a process of performing image processing on the road image, and determining the road event included in the road image can be implemented by adopting a neural network model based on deep learning. By utilizing a large number of training data to train the neural network model, the trained neural network model can extract an image feature, analyze and obtain the type and the lane of the road event included in the image, so as to realize accurate identification of a lane-level road event.

Step S304, performing multi-frame data clustering on all the road images including the road events to determine a road event occurring within the historical period and road event information of the road event, according to the road events, event types of the road events and lanes where the road events occur.

In this embodiment, this step can be implemented in the following ways:
taking the road images including the road events as target images, obtaining locations and orientation angles of the vehicles when collecting the target images; performing density-based clustering according to the road events included in the target images, the event types of the road events and the lanes where the road events occur, as well as the locations and the orientation angles of the vehicles when collecting the target images, to obtain a clustering result including the road event occurring within the historical period, where event location information of the road event includes a lane where it occurs, starting location coordinates and ending location coordinates.

Specifically, for each frame of target image including a road event, the location of a vehicle when collecting this target image can be determined based on the travelling trajectory of the vehicle collecting the target image within the historical period and a collection time of the target image, and the location of the vehicle when collecting the target image can be taken as the location of the road event in the target image.

The orientation angle of the vehicle can also be determined based on the travelling trajectory of the vehicle collecting the target image within the historical period and the collection time of the target image. The type and the lane of the road event included in the target image are obtained through the above step S303.

The event type and the lane of the road event included in each target image, as well as the location and the orientation angle of the vehicle when collecting this target image can be taken as one piece of road event data. The density-based clustering is performed on road event data corresponding to all target images to obtain a clustering result. The clustering result includes the road event(s) occurring within the historical period, and the event location information of each road event includes the lane where it occurs, the starting location coordinates and the ending location coordinates, which can accurately determine the event types and the event location information such as the lanes where they occur, the starting location coordinates and the ending location coordinates of all road events within the area ranges, so as to realize the accurate detection of lane-level road events.

Optionally, a density-based clustering method can adopt DBSCAN (Density-Based Spatial Clustering of Applications with Noise), or optimization algorithms of DBSCAN, or other density-based clustering algorithms, or the like, which is not limited in this embodiment.

This step is a specific implementation of performing multi-frame data clustering on all the road images including the road events to determine the road event that occurs within the historical period.

In an optional implementation, after determining the location of the vehicle when collecting the target image, the accurate location of the road event in the target image can be further determined based on a calibration parameter of a collection apparatus for collecting the target image and the location of the vehicle when collecting the target image. The event type and the lane of the road event included in each target image, the accurate location of the road event in this target image, and a travelling direction of the vehicle when collecting this target image can be taken as one piece of road event data. The density-based clustering is performed on road event data corresponding to all target images to obtain a clustering result. The clustering result can also include the road event occurring within the historical period, and the event location information of the road event includes the lane where it occurs, the starting location coordinates and the ending location coordinates, which can accurately determine the event types and the event location information such as the lanes where they occur, the starting location coordinates and the ending location coordinates of all road events within the area ranges, so as to realize the accurate identification of lane-level road events.

Step S305, verifying the road event according to a travelling trajectory of a vehicle within the historical period.

In this embodiment, after obtaining the road event that occurs within the historical period, the road event can be further verified by the travelling trajectory of the vehicle within the historical period.

The step can be implemented specifically in the following ways:
determining an occurrence area of the road event according to the event location information of the road event; determining whether there is an abnormal trajectory in the occurrence area of the road event according to the travelling trajectory of the vehicle within the historical period; if there is no abnormal trajectory in the occurrence area of the road event, determining that the road event does not exist.

The occurrence area of the road event may be an area where vehicles cannot pass when the road event occurs.

Specifically, the event location information of the road event includes the lane where the road event occurs, the starting location coordinates and the ending location coordinates. The occurrence area of the road event can be determined based on the lane where the road event occurs, the starting location coordinates and the ending location coordinates.

In a practical scenario, when a road event occurs on a road, vehicles cannot pass through the occurrence area of the road event, so the vehicles will have behaviors such as slowing down, travelling slowly, detour, and travelling trajectories will be abnormal, such as obvious congestion, or obvious detour behavior trajectories.

According to the travelling trajectories of the vehicles, an abnormal trajectory and a road section where the abnormal trajectory is located are identified by a trajectory mining method.

Further, by comparing the road section where the abnormal trajectory is located with the occurrence area of the road event, whether there is the abnormal trajectory in the occurrence area of the road event can be determined.

Optionally, the travelling trajectory of the vehicle within the historical period may be a travelling trajectory of the vehicle within the historical period which is obtained from other navigation applications, map applications, etc., and may also include travelling trajectories returned by multiple vehicles based on a crowdsourcing return manner. The trajectories may be obtained according to the current area range, and data within the current area range may also be screened after being obtained.

Step S306, screening the road event occurring within the historical period according to a verification result.

If there is an abnormal trajectory in the occurrence area of the road event, it can be further determined that the road event really exists, and the road event really occurs in this area.

Optionally, an area with the abnormal trajectory can be accurately determined according to a large number of vehicle travelling trajectories; the starting location coordinates and the ending location coordinates of the road event can be further modified according to a range of the area with the abnormal trajectory, to make the starting location coordinates and the ending location coordinates of the road event more accurate.

In this step, if it is determined that a certain road event does not exist according to the verification result, it means that the normal traffic of vehicles is not affected in this area, so that it can be determined that there is no road event occurring, then the road event is deleted from the road event(s) occurring within the historical period, so as to avoid misreporting of the road event that does not exist currently and improve the accuracy of the road event information on the electronic map.

Step S307, updating map data according to the road event information of each road event.

In this embodiment, after obtaining the road event occurring within the historical period, the map data can be updated according to the road event information of the road event, so that accurate navigation route planning or automatic driving route planning can be performed based on the updated map data including the road event information of the road event. In addition, the road event information of the road event can also be displayed on navigation planning routes, for users' reference and selection.

Optionally, by adjusting the length of the historical period, update frequency of the road event information in the map data can be adjusted, which can realize real-time update of the road event information.

In a possible scenario, a road event occurring within the historical period may be a newly-added road event that begins to occur within the historical period. The map data does not include any information about the road event, and a first road event can be used to refer to this type of road event.

For the first road event occurring within the historical period, the first road event is added to the map data if the map data does not include the first road event. In this way, road event information of the newly-added road event can be added to the map data in time.

In a possible scenario, a road event occurring within the historical period may have occurred before the historical period, and is still occurring within the historical period. Location information of the road event may change, and a second road event can be used to refer to this type of road event.

For the second road event occurring within the historical period, road event information of the second road event in the map data is updated if the map data already includes the second road event. In this way, the road event information of the existing road event in the map data can be updated in time, and the accuracy of the road event information in the map data is improved.

In a possible scenario, for a road event that has occurred before the historical period and has been eliminated before the historical period, and that road event information thereof is still included in the map data, a third road event can be used to refer to this type of road event.

For the third road event included in the map data, the third road event is deleted from the map data if the third road event is not included in the road event occurring within the historical period. In this way, the road event information of the road event that has been eliminated can be deleted from the map data in time, and the accuracy of the road event information in the map data is improved.

In this embodiment, the road images and vehicle travelling data (including but not limited to travelling trajectories, speed, braking information, etc.) are obtained by way of crowdsourcing return, and real-time comprehensive analysis and processing are carried out by way of combining image analysis and GPS trajectory analysis to obtain lane-level road events, which can judge lane-level road events under any road conditions.

FIG. 5 is a schematic diagram of a road event detection apparatus according to a third embodiment of the present application. The road event detection apparatus provided by the embodiment of the present application can perform processing flows provided by embodiments of the road event detection method. As shown in FIG. 5, the road event detection apparatus 50 includes: a road image obtaining module 501, an event detecting module 502 and an event information updating module 503.

Specifically, the road image obtaining module 501 is configured to obtain road images collected and returned by multiple vehicles within a historical period.

The event detecting module 502 is configured to perform image processing on the road images to determine road events included in the road images.

The event detecting module 502 is further configured to perform multi-frame data clustering on all road images including the road events to determine a road event occurring within the historical period, where the road event has road event information, and the road event information includes an event type and/or event location information.

The event information updating module 503 is configured to update map data according to the road event information of each road event.

The apparatus provided by the embodiment of the present application can be specifically used to execute the method embodiment provided by the above first embodiment, and the specific functions will not be repeated here.

In the embodiment of the present application, by obtaining the road images collected and returned by multiple vehicles within the historical period, and performing image processing on single-frame road images to determine the road events included in the road images, types and/or locations of the road events can be located accurately; further, by performing clustering on the road event data of multiple frames of the road images including the road events to obtain all road events occurring within the historical period and the road event information, all road events occurring within the historical period can be determined accurately, and the types and/or the locations of the road events can be determined accurately, thereby improving the accuracy of road event detection.

On the basis of the above third embodiment, in a fourth embodiment of the present application, the road image obtaining module is further configured to:
send data return tasks to the multiple vehicles, where the data return tasks are used to instruct the multiple vehicles to collect and return the road images according to a collection rule, where the collection rule includes: collecting and returning road images according to a first time interval or a first distance interval, or collecting and returning road images according to a second time interval or a second distance interval within a preset range of a road event occurring currently, where the second time interval is less than the first time interval, and the second distance interval is less than the first distance interval; and receive the road images sent by the multiple vehicles.

In an optional implementation, the event detecting module is further configured to:
detect a lane location in a road image, and a location of an event marker appearing in the road image; and determine that the road image includes a road event, if it is determined that the event marker appears in a certain lane according to the lane location in the road image and the location of the event marker appearing in the road image.

In an optional implementation, the event detecting module is further configured to:
determine the lane where the event marker appears to be a lane where the road event occurs; and determine an event type of the road event according to a type of the event marker.

In an optional implementation, the event detecting module is further configured to:
perform multi-frame data clustering on all the road images including the road events to determine the road event occurring within the historical period and the road event information of the road event, according to the road events, event types of the road events and lanes where the road events occur.

In an optional implementation, the event detecting module is further configured to:
take the road images including the road events as target images, obtaining locations and orientation angles of the vehicles when collecting the target images; and perform density-based clustering according to the road events included in the target images, the event types of the road events and the lanes where the road events occur, as well as the locations and the orientation angles of the vehicles when collecting the target images, to obtain a clustering result including the road event occurring within the historical period, where the event location information of the road event includes the lane where the road event occurs, starting location coordinates and ending location coordinates.

In an optional implementation, the event detecting module is further configured to:
verify the road event according to a travelling trajectory of a vehicle within the historical period; and screen the road event occurring within the historical period according to a verification result.

In an optional implementation, the event detecting module is further configured to:
determine an occurrence area of the road event according to the event location information of the road event; determine whether there is an abnormal trajectory in the occurrence area of the road event according to the travelling trajectory of the vehicle within the historical period; and if there is no abnormal trajectory in the occurrence area of the road event, determine that the road event does not exist.

In an optional implementation, the event detecting module is further configured to:
if it is determined that a certain road event does not exist according to the verification result, delete the road event from the road event occurring within the historical period.

In an optional implementation, the event detecting module is further configured to:
if there is the abnormal trajectory in the occurrence area of the road event, determine that the road event really exists.

In an optional implementation, the event information updating module is further configured to:
for a first road event occurring within the historical period, add the first road event to the map data if the map data does not include the first road event.

In an optional implementation, the event information updating module is further configured to:
for a second road event occurring within the historical period, update road event information of the second road event in the map data if the map data already includes the second road event.

In an optional implementation, the event information updating module is further configured to:
for a third road event included in the map data, delete the third road event from the map data if the third road event is not included in the road event occurring within the historical period.

The apparatus provided by the embodiment of the present application can be specifically used to execute the method embodiment provided by the above second embodiment, and the specific functions will not be repeated here.

In this embodiment, the road images and vehicle travelling data (including but not limited to travelling trajectories, speed, braking information, etc.) are obtained by way of crowdsourcing return, and real-time comprehensive analysis and processing are carried out by way of combining image analysis and GPS trajectory analysis to obtain lane-level road events, which can judge lane-level road events under any road conditions.

According to the embodiments of the application, the present application further provides an electronic device and a readable storage medium.

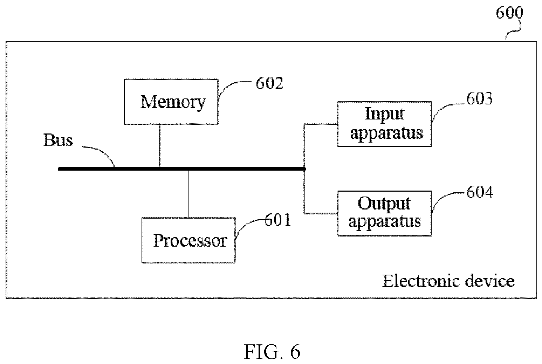

As shown in FIG. 6, FIG. 6 is a block diagram of an electronic device for implementing a road event detection method according to an embodiment of the present application. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital assistants, cellular phones, smart phones, wearable devices, and other similar computing apparatuses. The components and their connections and relationships, as well as their functions shown herein are merely used as examples, and are not intended to limit the implementation of the present application described and/or required herein.

As shown in FIG. 6, the electronic device 600 includes: one or more processors 601, a memory 602, and interfaces for connecting various components, including a high-speed interface and a low-speed interface. The components are interconnected using different buses, and can be installed on a public motherboard or in other installation manners as required. The processor can process instructions executed within the electronic device 600, including instructions stored in or on the memory for displaying graphical information of GUI on an external input/output apparatus (such as, a display device coupled to an interface). In other implementations, multiple processors and/or multiple buses may be used with multiple memories, if required. Similarly, multiple electronic devices 600 may be connected, and each device provides part of the necessary operations (for example, as a server array, a group of blade servers, or a multiprocessor system). One processor 601 is taken as an example in FIG. 6.

The memory 602 is a non-transitory computer-readable storage medium provided by the present application. The memory stores instructions executable by at least one processor, so that the at least one processor executes the road event detection method provided by the present application. The non-transitory computer-readable storage medium of the present application stores computer instructions, which are used to cause a computer to execute the road event detection method provided by the present application.

As a non-transitory computer-readable storage medium, the memory 602 can be used to store non-transitory software programs, non-transitory computer-executable programs and modules, such as the program instructions/modules (for example, the road image collecting module 501, the event detecting module 502 and the event information updating module 503 shown in FIG. 5) corresponding to the road event detection method in the embodiments of the present application. The processor 601 executes various functional applications and data processing of a server by running the non-transitory software programs, instructions and modules stored in the memory 602, that is, to implement the road event detection method in the above method embodiments.

The memory 602 may include a program storage area and a data storage area, where the program storage area may store an operating system and an application program required for at least one function; the data storage area may store data created according to the use of the electronic device 600 for road event detection, and the like. In addition, the memory 602 may include a high-speed random access memory, and may further include a non-transitory memory, for example at least one magnetic disk storage device, a flash memory device, or other non-transitory solid-state storage devices. In some embodiments, the memory 602 may optionally include memories that are remotely disposed relative to the processor 601, and these remote memories may be connected to the electronic device 600 for road event detection through a network. Examples of the above network include, but are not limited to, the Internet, an intranet, a local area network, a mobile communication network, and their combinations.

The electronic device 600 for the road event detection may further include an input apparatus 603 and an output apparatus 604. The processor 601, the memory 602, the input apparatus 603 and the output apparatus 604 may be connected through a bus or in other manners. Connection through a bus is taken as an example in FIG. 6.

The input apparatus 603 may receive inputted numeric or character information, and generate key signal inputs related to user settings and function control of the electronic device 600 for road event detection, such as a touch screen, a keypad, a mouse, a trackpad, a touch pad, a pointing stick, one or more mouse buttons, a trackball, a joystick and other input apparatus. The output apparatus 604 may include a display device, an auxiliary lighting apparatus (for example, an LED), a tactile feedback apparatus (for example, a vibration motor), and the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry systems, integrated circuit systems, specific ASICs (application specific integrated circuits), computer hardware, firmware, software, and/or combinations thereof. These various implementations may include: being implemented in one or more computer programs that are executable and/or interpreted on a programmable system including at least one programmable processor, where the programmable processor may be a dedicated or general-purpose programmable processor that may receive data and instructions from a storage system, at least one input apparatus and at least one output apparatus, and transmit data and instructions to the storage system, the at least one input apparatus and the at least one output apparatus.

These computing programs (also known as programs, software, software applications, or code) include machine instructions of a programmable processor, and can utilize advanced processes and/or object-oriented programming languages, and/or assembly/machine languages to implement. As used herein, the terms "machine-readable medium" and "computer-readable medium" refer to any computer program product, device, and/or apparatus (for example, a magnetic disk, an optical disk, a memory, a programmable logic device (PLD)) used to provide machine instructions and/or data to the programmable processor, including machine-readable media that receive machine instructions as machine-readable signals. The term "machine-readable signal" refers to any signal used to provide machine instructions and/or data to the programmable processor.

In order to provide interaction with a user, the systems and technologies described here can be implemented on a computer that has: a display apparatus (for example, a CRT (cathode ray tube) or an LCD (liquid crystal display) monitor) for displaying information to the user; and a keyboard and pointing apparatus (for example, a mouse or a trackball) through which the user can provide inputs to the computer. Other kinds of apparatuses may also be used to provide interaction with the user, for example, the feedback provided to the user may be any form of sensory feedback (for example, visual feedback, auditory feedback, or tactile feedback); and may receive inputs from the user in any form (including acoustic inputs, voice inputs, or tactile inputs).

The systems and technologies described here may be implemented in a computing system that includes background components (for example, as a data server), or a computing system that includes middleware components (for example, an application server), or a computing system that includes front-end components (for example, a user computer with a graphical user interface or a web browser, through which the user can interact with the implementations of the systems and technologies described here), or a computing system that includes any combination of such background components, middleware components or front-end components. The components of a system may be interconnected by any form or medium of digital data communication (for example, a communication network). Examples of the communication network include: a local area network (LAN), a wide area network (WAN), and the Internet.

A computer system may include a client and a server. The client and the server are generally remote from each other and usually interact through a communication network. A client-server relationship is generated by computer programs running on corresponding computers and having the client-server relationship with each other. The server may be a cloud server, also known as a cloud computing server or a cloud host, which is a host product in a cloud computing service system, and solves the shortcomings of difficult management and weak business scalability in a traditional physical host and a virtual private server (VPS). The server may also be a server of a distributed system, or a server combined with a blockchain.

It should be understood that the various forms of processes shown above can be used, and steps can be reordered, added, or deleted. For example, the steps described in the present application may be executed in parallel, sequentially, or in different orders, as long as the desired results of the technical solutions disclosed in the present application can be achieved, which is not limited here.

The above specific implementations do not constitute a limitation to the protection scope of the present application. It should be understood by those skilled in the art that various modifications, combinations, sub-combinations, and substitutions may be performed according to design requirements and other factors. Any modification, equivalent replacement, improvement and the like made within the spirit and principle of the present application shall be included in the protection scope of the present application.

## Claims

1. A road event detection method, comprising:
obtaining (S201) road images collected and returned by multiple vehicles within a historical period;
performing (S202) image processing on the road images to determine road events comprised in the road images;
performing (S203) multi-frame data clustering on all road images comprising the road events to determine a road event occurring within the historical period, wherein the road event has road event information, and the road event information comprises an event type and/or event location information; and
updating (S204) map data according to the road event information of each road event.

2. The method according to claim 1, wherein the obtaining (S201) the road images collected and returned by multiple vehicles within the historical period comprises:
sending (S301) data return tasks to the multiple vehicles, wherein the data return tasks are used to instruct the multiple vehicles to collect and return the road images according to a collection rule, wherein the collection rule comprises: collecting and returning road images according to a first time interval or a first distance interval, or collecting and returning road images according to a second time interval or a second distance interval within a preset range of a road event occurring currently, wherein the second time interval is less than the first time interval, and the second distance interval is less than the first distance interval; and
receiving (S302) the road images sent by the multiple vehicles.

3. The method according to claim 1, wherein the performing (S202, S303) image processing on the road images to determine the road events comprised in the road images comprises:
detecting a lane location in a road image, and a location of an event marker appearing in the road image; and
determining that the road image comprises a road event, if it is determined that the event marker appears in a lane according to the lane location in the road image and the location of the event marker appearing in the road image.

4. The method according to claim 3, after performing (S202, S303) image processing on the road images to determine the road events comprised in the road images, further comprising:
determining the lane where the event marker appears to be a lane where the road event occurs; and
determining an event type of the road event according to a type of the event marker.

5. The method according to claim 4, wherein the performing (S203) multi-frame data clustering on all road images comprising the road events to determine the road event occurring within the historical period comprises:
performing (S304) multi-frame data clustering on all the road images comprising the road events to determine the road event occurring within the historical period and the road event information of the road event, according to the road events, event types of the road events and lanes where the road events occur.

6. The method according to claim 5, wherein the performing (S304) multi-frame data clustering on all the road images comprising the road events to determine the road event occurring within the historical period and the road event information of the road events, according to the road events, the event types of the road events and the lanes where the road events occur, comprises:
taking the road images comprising the road events as target images, obtaining locations and orientation angles of the vehicles when collecting the target images;
performing density-based clustering according to the road events comprised in the target images, the event types of the road events and the lanes where the road events occur, as well as the locations and the orientation angles of the vehicles when collecting the target images, to obtain a clustering result comprising the road event that occurs within the historical period, wherein the event location information of the road event comprises the lane where the road event occurs, starting location coordinates and ending location coordinates.

7. The method according to claim 1, before updating (S204, S307) the map data according to the road event information of each road event, further comprising:
verifying (S305) the road event according to a travelling trajectory of a vehicle within the historical period; and
screening (S306) the road event occurring within the historical period according to a verification result.

8. The method according to claim 7, wherein the verifying (S305) the road event according to the travelling trajectory of the vehicle within the historical period comprises:
determining an occurrence area of the road event according to the event location information of the road event;
determining whether there is an abnormal trajectory in the occurrence area of the road event according to the travelling trajectory of the vehicle within the historical period; and
if there is no abnormal trajectory in the occurrence area of the road event, determining that the road event does not exist; preferably, if there is the abnormal trajectory in the occurrence area of the road event, determining that the road event exists;
preferably, wherein the screening the road event occurring within the historical period according to the verification result comprises:
if it is determined that a road event does not exist according to the verification result, deleting the road event from the road event occurring within the historical period.

9. The method according to any one of claims 1 to 8, wherein the updating (S204, S307) the map data according to the road event information of each road event comprises:
for a first road event occurring within the historical period, adding the first road event to the map data if the map data does not comprise the first road event; and/or
for a second road event occurring within the historical period, updating road event information of the second road event in the map data if the map data already comprises the second road event; and/or
for a third road event comprised in the map data, deleting the third road event from the map data if the third road event is not comprised in the road event occurring within the historical period.

10. A road event detection apparatus (50), comprising:
a road image obtaining module (501), configured to obtain road images collected and returned by multiple vehicles within a historical period;
an event detecting module (502), configured to perform image processing on the road images to determine road events comprised in the road images, and perform multi-frame data clustering on all road images comprising the road events to determine a road event occurring within the historical period, wherein the road event has road event information, and the road event information comprises an event type and/or event location information;
an event information updating module (503), configured to update map data according to the road event information of each road event.

11. The apparatus according to claim 10, wherein the road image obtaining module (501) is further configured to:
send data return tasks to the multiple vehicles, wherein the data return tasks are used to instruct the multiple vehicles to collect and return the road images according to a collection rule, wherein the collection rule comprises: collecting and returning road images according to a first time interval or a first distance interval, or collecting and returning road images according to a second time interval or a second distance interval within a preset range of a road event occurring currently, wherein the second time interval is less than the first time interval, and the second distance interval is less than the first distance interval; and
receive the road images sent by the multiple vehicles.

12. The apparatus according to claim 10, wherein the event detecting module (502) is further configured to:
detect a lane location in a road image, and a location of an event marker appearing in the road image; and
determine that the road image comprises a road event, if it is determined that the event marker appears in a lane according to the lane location in the road image and the location of the event marker appearing in the road image;
preferably, wherein the event detecting module is further configured to:
determine the lane where the event marker appears to be a lane where the road event occurs; and determine an event type of the road event according to a type of the event marker;
preferably, wherein the event detecting module is further configured to:
perform multi-frame data clustering on all the road images comprising the road events to determine the road event occurring within the historical period and the road event information of the road event, according to the road events, event types of the road events and lanes where the road events occur;
preferably, wherein the event detecting module is further configured to:
take the road images comprising the road events as target images, obtain locations and orientation angles of the vehicles when collecting the target images; and
perform density-based clustering according to the road events comprised in the target images, the event types of the road events and the lanes where the road events occur, as well as the locations and the orientation angles of the vehicles when collecting the target images, to obtain a clustering result comprising the road event occurring within the historical period, wherein the event location information of the road event comprises the lane where the road event occurs, starting location coordinates and ending location coordinates.

13. The apparatus according to claim 10, wherein the event detecting module (502) is further configured to:
verify the road event according to a travelling trajectory of a vehicle within the historical period; and screen the road event occurring within the historical period according to a verification result;
preferably, wherein the event detecting module is further configured to:
determine an occurrence area of the road event according to the event location information of the road event;
determine whether there is an abnormal trajectory in the occurrence area of the road event according to the travelling trajectory of the vehicle within the historical period; and
if there is no abnormal trajectory in the occurrence area of the road event, determine that the road event does not exist; preferably, if there is the abnormal trajectory in the occurrence area of the road event, determine that the road event exists;
preferably, wherein the event detecting module is further configured to:
if it is determined that a road event does not exist according to the verification result, delete the road event from the road event occurring within the historical period.

14. The apparatus according to any one of claims 10 to 13, wherein the event information updating module (503) is further configured to:
for a first road event occurring within the historical period, add the first road event to the map data if the map data does not comprise the first road event; and/or
for a second road event occurring within the historical period, update road event information of the second road event in the map data if the map data already comprises the second road event; and/or
for a third road event comprised in the map data, delete the third road event from the map data if the third road event is not comprised in the road event occurring within the historical period.

15. A non-transitory computer-readable storage medium, having computer instructions stored thereon, wherein the computer instructions are used to cause a computer to execute the method according to any one of claims 1 to 9.
